# EUROPEAN PATENT APPLICATION

(11) **EP 1 336 929 A1**
(43) Date of publication of application: **20.08.2003**
(21) Application number: 02080611.3
(22) Date of filing: 31.12.2002
(51) Int. Cl.: G06F 17/60

(54) **Control software for preparing messages with processing and facility control components**

(30) Priority: 31.12.2001 NL 1019681
(71) Applicant: Neopost Industrie B.V., 9201 BX Drachten (NL)
(72) Inventor: Wiersma, Jelle, 9222 LB Drachtster Compagnie (NL); Edens, Bertus Karel, 9204 JT Drachten (NL)
(74) Representative: Prins, Adrianus Willem

(57) **Abstract**

Control software for controlling the preparation of messages by means of apparatus is equipped with processing facilities designed for carrying out defined processing operations, and a control structure for driving the processing facilities. For configuring the software, there are provided: processing control components with converting instructions, for processing message data into processing instructions which specify processing operations for preparing a message, and facility control components with converting instructions for processing the processing instructions into drive instructions for driving the processing facilities for carrying out processing operations in accordance with the processing instructions. The processing control components are configured in accordance with the defined processing operations for the execution of which the processing facilities are designed; and the facility control components are configured in accordance with specifications of the processing facilities.

## Description

### BACKGROUND OF THE INVENTION

This invention relates to methods for configuring a control of an apparatus for preparing messages and for controlling such an apparatus, to a computer program structure for controlling such an apparatus, and to an apparatus provided with such computer software.

Apparatuses for preparing messages, such as postal items or messages to be transmitted via telecommunication, such as fax messages, e-mails, SMS messages and voice mails, generally have a modular character in the sense that they are composed of a number of devices which are exchangeable for similar, though not completely identical, devices capable of carrying out partly similar and partly different processing operations. All this implies that such apparatuses can be composed in a large variety of configurations whereby at any time future configurations which will include devices yet to be developed are not to be foreseen.

Moreover, the apparatuses have a number of optional facilities, such as stations for folding, insert feeding or sorting, or which some users do and other users do not have at their disposal. This means that many designs of the control structure are necessary. Sometimes, moreover, complex adaptations are necessary for adjusting the control structure, and in particular the control software, to new developments not foreseen in the original designs thereof. Moreover, users utilizing third-party equipment for preparing messages, for instance by outsourcing the production of postal items as such and/or having it carried out at locations close to the area of distribution of the postal items or by outsourcing large-scale distribution of electronic messages, are often faced, within a relatively short period of time, with equipment having different configurations and possibilities.

In addition, there are moreover systems where particular stations can be simply temporarily removed or be replaced with different stations. Neopost System 7, for instance, has a transport unit of the TR7-type on which insert feeder units are placed in an easily detachable manner. Also, particular stations or functions of a device can be temporarily absent, for instance in that objects or substances to be fed have run out, or because of maintenance or repair. This means that the control structure of an installed system must also be suitable for driving a particular individual device in different configurations.

It has been attempted to give the control structure a modular design in certain respects, as described, for instance, in US patent 5,603,059, but in many cases it proves to be complex to guarantee the robustness of the system in case of configurational adaptations that have consequences for the functions that the apparatus can fulfill.

### SUMMARY OF THE INVENTION

It is an object of the invention to provide a solution which enables the control structure of an apparatus for composing messages, to be adapted in a simple manner to changes of the configuration of the apparatus.

According to the invention, this object is achieved by providing a method for configuring an apparatus according to claim 1. The invention further provides a method for controlling an apparatus according to claim 5, which lends itself in particular for execution by a control configured by means of the method according to the invention. Further, the invention provides a computer program structure according to claim 6, which is designed for configuration by means of the method according to the invention and, for instance, can be stored on a machine-readable information carrier, or can be made available as a signal via a data communication channel, and an apparatus according to claim 13, provided with such a computer program structure.

Particularly advantageous elaborations of the invention are laid down in the dependent claims.

In the following, the invention is further illustrated and elucidated on the basis of a few exemplary embodiments and with reference to the drawing.

### BRIEF DESCRIPTION OF THE DRAWINGS

Fig. 1 is a schematically cutaway side view of an example of an apparatus according to the invention;
Fig. 2 is a schematic representation of a structure of components for controlling the apparatus according to Fig. 1;
Fig. 3 is a diagram in "Unified Modelling Language" representation indicating how a number of the components shown in Fig. 2 cooperate for processing instructions for preparing a series of postal items; and
Fig. 4 is a diagram in "Unified Modelling Language" representation indicating how a number of the components shown in Fig. 2 cooperate when configuring a system.

### DETAILED DESCRIPTION

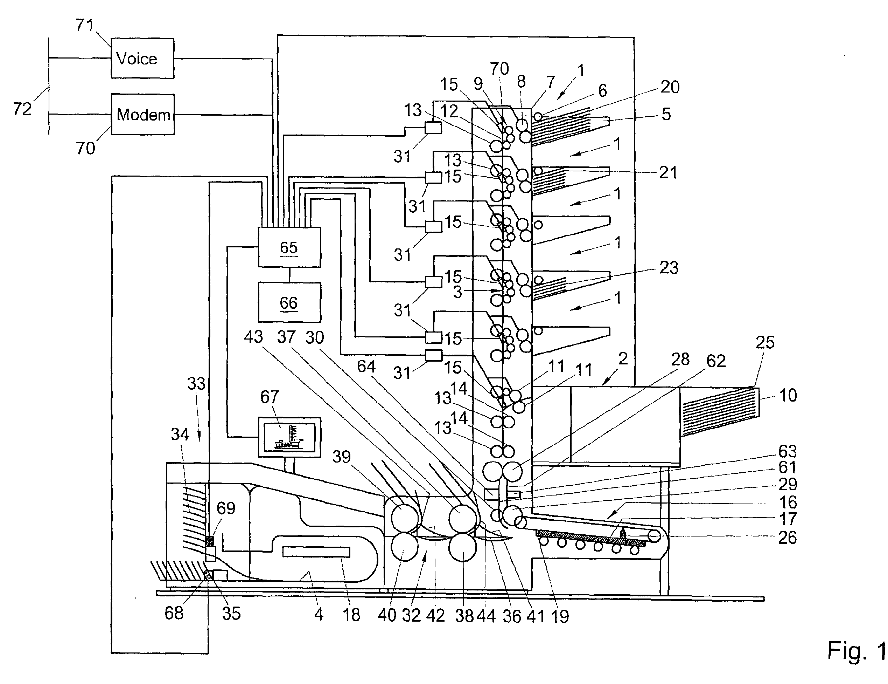

The apparatus according to the example represented in Fig. 1 has as feeding provisions a number of feeder stations 1 for feeding documents 20, 21, 23, and a printer 2 for printing sheets 25 and feeding printed sheets.

Each of the document feeder stations 1 has a magazine 5 for receiving documents to be supplied. These are generally preprinted attachments mutually identical per magazine 5, but it is also possible to feed mutually different main documents from one and the same magazine. For feeding the documents, the feeder stations 1 are each provided with a feed roller 6, a separation roller 7, a transport roller 8 and a pair of delivery rollers 9.

A position of the system designated 1' is empty, apart from delivery rollers serving to pass on documents which are to be passed from upstream feeder stations along that position 1'. At this position 1', for instance a same feeder station as the feeder stations 1 can be placed, but also a special feeder station or a station for executing special operations, such as stamping passing documents or providing these with a sticker, a sachet or a plastic card.

The printer 2 is provided with a magazine 10 for sheets 25 to be printed and a pair of feed rollers 11 for each time feeding a printed sheet at a suitable moment. The printer 2 is further designed and positioned such that the printing of a sheet in each case is completed before the sheet reaches a waiting position between the delivery rollers 11.

The feeder stations 1 and the printer 2 link up with a feed track 3 having a series of opposite transport rollers 12, 13, 14. If it is preferred to equip the system with a fixed minimum number of feeder stations, it is advantageous to provide circulating conveyor belts extending on the side of the transport track 3 away from the magazines 5, along the transport track 3.

The apparatus shown further comprises an aligning station 16 for aligning documents belonging to a set and any other postal items, to form a stack, on the right-hand side in the drawing, having document edges substantially in alignment on one side. The aligning station 16 is designed as a terminal station with an aligning surface 19 with a stop 26 and a discharge track 36 in line with the aligning surface 19. Upstream of the aligning surface, the aligning station 16 has transport rollers 27, 28, 29, 30, and guides 61, 62. The aligning surface 19 is defined by a series of rollers.

The documents can be transported in the feeding direction as far as against the stop 26 and subsequently be discharged in the opposite direction to a folding station 32. The aligned document edges then form the trailing edge of the stack, which is advantageous in folding the stack.

Opposite the aligning surface 19, a conveyor belt 17 is arranged, which runs approximately parallel to the aligning surface 19, can exert some pressure on the aligning surface 19 and has a greater coefficient of friction concerning documents than does the aligning surface 19. The aligning surface 19 is moreover provided with rollers for further limiting the friction between documents and that surface. By driving the belt 17 in the direction of the stop 26, documents present between the aligning surface 19 and the belt 17 can be urged against the stop 26, so that the document edges are mutually aligned on the side of the stop 26.

By driving the conveyor belt 17 in such a manner that the part on the side of the aligning surface 19 moves away from the stop, a document can be moved over the surface 19 as far as against the stop 26. A next document, which has been partly passed between the preceding document and the conveyor belt 17, will, moving over the preceding document, likewise move as far as against the stop 26 when the belt 17 is driven in the direction of the stop 26. Thus, successive documents can be aligned.

Located downstream of the aligning station 16 is a folding station 32 provided with a first and a second pair of folding rollers 37, 38 and 39, 40, with the discharge track 36 extending between the folding rollers 37, 38 and 39, 40. Provided between the stop 26 and the folding rollers 37, 38 and 39, 40, respectively, are deflectors 41 and 42 for deflecting the edge of a stack remote from the stop 26. Opposite a folding nip between each pair of folding rollers 37, 38 and 39, 40 is a folding knife 43, 44 for pressing a deflected portion of a document or a stack of documents into the folding nip.

After alignment of the documents of a stack in the aligning station 16, the stack is first moved against the feeding direction and then to the folding station 32, whereby, at least if the stack is to be folded, the edge of the stack remote from the stop 26, and a portion of the stack contiguous thereto, is deflected along a pair of folding rollers 37, 38 or 39, 40 and the stack is subsequently pressed into a folding nip between the folding rollers 37, 38 or 39, 40 by one of the folding knives 43, 44. Thereupon the folding rollers are driven, so that a fold is provided in the stack.

Connected to the folding station 32 is an inserter station 33. This inserter station 33 is equipped with two envelope magazines 34, 35. What can serve as a basis for such an inserter station is an inserter station described in more detail in the European patent application 0781671. The inserter station 33 has an envelope track 4 and an exit 18 for packaged postal items. The envelope magazines 34, 35 are provided with separation units 68, 69 for delivering envelopes one by one and for detecting the presence of envelope in the respective magazine 34, 35.

The positions of the feeder stations 1, 1' are each provided with a detector 15 just upstream of the location where the feed track connects to the transport track 3. The detectors 15 can measure one or more properties of the system. The detectors 15 are each coupled to a control unit 31 of the respective feeder station 1, 1'. It is also possible to detect properties of documents from all magazines 5 with a same detector 63, 64 downstream of the stations 1. In many cases, it is then necessary to have documents pass along that detector individually or at least in a condition uncovered on the side of the detector 63 or 64.

The control units 31 are coupled to the central control unit 65, and control the feeder stations and the transport rollers 12, 13. The control units 31 are driven by the central control unit 65.

The system shown in Fig. 1 is controlled with the aid of the central control unit 65. To that end, in a memory 66 readable by the central control unit 65, a program code is stored in accordance with which the control unit can communicate with the physical system for observing information concerning the status of the physical system.

It will be clear that the system according to Fig. 1 can be utilized in a large variety of configurations. For instance, the number of feeder stations 1 can be selected to be larger or smaller, and one or more of those stations can be extra fast high-capacity stations. Further, for instance, a printer of a different type can be used, and also, or as an alternative, a printer can be placed on the right-hand side of the aligning station 16 for feeding documents from that side, the detector can be optional and a different inserter station 33, for instance a station with a different number of envelope magazines or suitable for packaging other sizes, can be used. Furthermore, the station can be further provided with different exits, to be selectively chosen, for ready postal items, and provisions (not shown) for selecting and combining associated postal items can be used.

Further, in the memory 66, program code is stored for, starting from message data, generating e-mail, fax messages, SMS and voice mails as well as control software for driving a modem 70 and a voice generator 71 which are both connected to the public telephone network 72. Through that telephone network 72 and the modem 70, the control unit can also receive instructions for preparing messages.

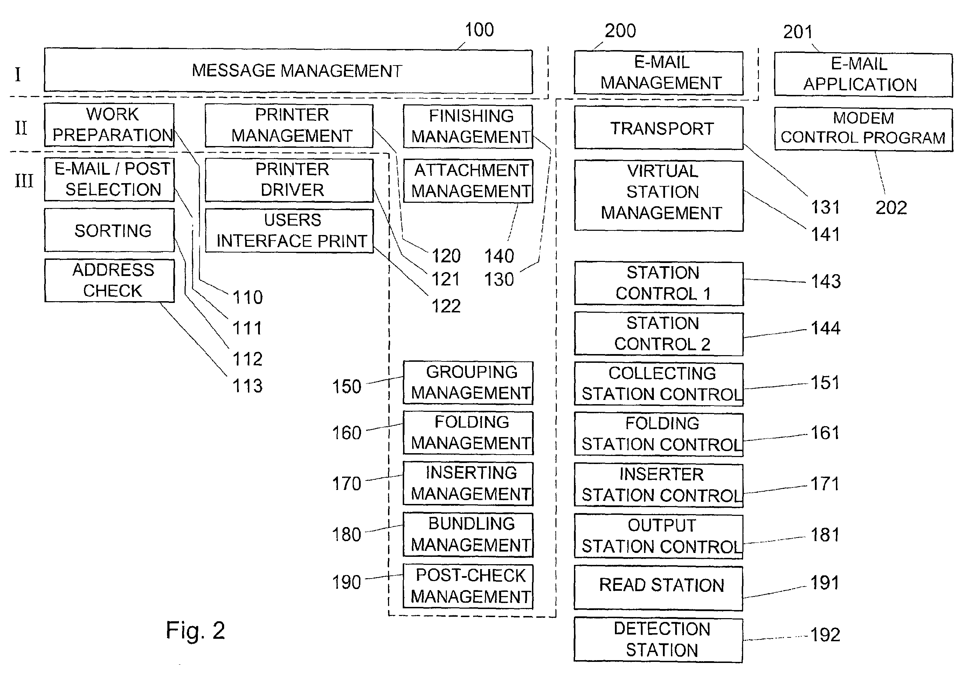

In the program code in the memory 66 as represented in Fig. 2, three levels I, II and III can be distinguished. The highest level I is formed by the message management core 100. This contains program code for managing the completion of message data to be processed, for instance with the aid of a number of queues belonging to the different possible processing operations for processing message data into a message to be sent or sent.

The second level II is formed by processing control components 110, 120, 130, 140, 150, 160, 170, 180, 190, 200. The processing control components contain instructions for processing message data into processing instructions for the processing operations at a level abstracted from the type of processing facility. The processing control components by which data concerning facilities and messages to be prepared are exchanged directly with the message management core 100 are, according to this example, the processing control components work preparation 110, printer management 120, finishing management 130 and e-mail management 200. Exchange of data concerning finishing possibilities and finishing instructions proceeds, according to this example, between on the one hand the processing control component finishing management 130 and on the other hand the processing control components attachment management 140, grouping management 150, folding management 160, inserting management 170, bundling management 180 and post-check management 190.

As regards the control of the finishing of physical documents to form postal items, therefore, two sublevels can be distinguished. The highest sublevel is formed by the finishing control component 130 which manages which of the message data to be processed are to be sent in what order to which processing control components, but does not yet convert them into processing instructions, and also monitors for which postal items 'ready'-messages have been received from the processing control components 140, 150, 160, 170, 180, and 190 in direct communication therewith.

Further, the processing control component finishing management 130 converts data concerning the documents to be prepared and ready-messages coming from the management functions directly cooperating therewith, into processing instructions for the facility control 131 which, on the basis thereof, regulates the timing of the transport (level III). The processing control components 140, 150, 160, 170, 180 and 190 too convert the received message data into processing instructions. For instance, folding management 160 can translate the specification that A4-size documents are to be packaged in a C5-6 envelope into positions where folds are to be made in the documents. In principle, this system of determining folding positions is the same for any type of folding machine and can also take into account the address position and the position of a window in an envelope.

Thereupon, the determined processing operation is to result in the actual driving of facilities for executing the respective operation. For instance, for a folding machine 32, this is the proper timing of the activation of folding knives for making a fold in response to detection of the leading edge of the document(s) to be folded. However, for folding stations with motor-adjustable stops in the folding sections against which the documents run, this will be, for instance, the positions of those stops.

For driving the respective facilities on the basis of the processing instructions generated by the processing control components 110, 120, 130, 140, 150, 160, 170, 180, 190, 200, the program code further comprises a third level III with facility control components 111, 112, 113, 121, 122, 131, 141, 143, 144, 151, 161, 171, 181, 191, 192, 201, 202.

The facility control components 121, 122, 132, 143, 144, 151, 161, 171, 181, 191, 192, 201, 202 are each associated with a processing station such as the printer 2, the feeder stations 1 and the folding station 32. Naturally, for the feeder stations shown in Fig. 1, several station controls 143, 144 will be necessary, but for the sake of convenience only two station control components 143, 144 are represented in Fig. 2.

As the processing functions and the facilities of the system required for fulfilling those processing functions (these facilities may be both physical stations and, for instance, computer applications such as an e-mail application 201) are incorporated in the program code as components, a modular build-up of the program is obtained, and the program can be modified in a simple manner if the physical configuration is changed, for instance through the removal of one of the feeder stations 1, replacement of the printer 2 or modification of the processing operations of the system such as adding additional folding steps. Modules can be replaced while the components cooperating therewith can cooperate with new components because of standardized exchange of data.

The processing of documents into postal items in the system 1 shown comprises the steps of: sorting, printing, adding attachments, folding, inserting, bundling and post-checking. Each of the steps is represented in the program code as a processing control component and can be carried out through activation of the processing control component.

It is noted that a processing operation can sometimes be carried out in different ways. For instance, adding a particular attachment, depending on the filling thereof, can be assigned by attachment management 140 to virtual station management 141 or to the facility controls 143, 144 for controlling attachment stations. Further, virtual station management 141 can in turn, in response to processing instructions coming from attachment management 140, generate additional message data in the form of a print file, which is sent to printer management 120. Additional message data are processed by printer management 120 into instructions for printing attachment documents along with the main document. Thus, virtual station management 141 does not drive a physical appliance, but reads selectively from a file with attachment data.

Sorting too is an example of an operation which can be carried out by a physical station as well as in electronic form on a number of electronic files. For instance, the facility control component "sorting" 112, in response to message data specifying delivery sorted according to post code and bundled, can first drive a sorting program for carrying out a sorting on the files in electronic form. In addition, the facility control, depending on the numbers found during sorting, can add these as additional message specifications. These bundle specifications can then be sent via "finishing management" 130 to "bundling management" 180, where they are converted into processing instructions for the facility control components "output station control" 181.

For providing a highly robust modularity, it is advantageous if the processing control components are formed by processing objects forming instantiations of processing classes, and the facility control components are formed by facility objects forming instantiations of facility classes, while further, expressions are provided comprising the processing configuration instructions for creating the processing objects each as an instantiation of one of the processing classes, and expressions are provided containing the station configuration instructions for creating facility objects each as an instantiation of one the station classes mentioned.

Object oriented programs for controlling data processors are known per se, also in the field of programs for controlling equipment for preparing postal items. Reference is made here to "ICT-zakboekje informatie- en communicatietechnologie" Bemelmanse et al., PBNA 1999, ISNBN 90 6228 303 9, in which it is described, for instance, that an object oriented program consists of a series of class definitions. From each of these classes, a random number of instances can be made.

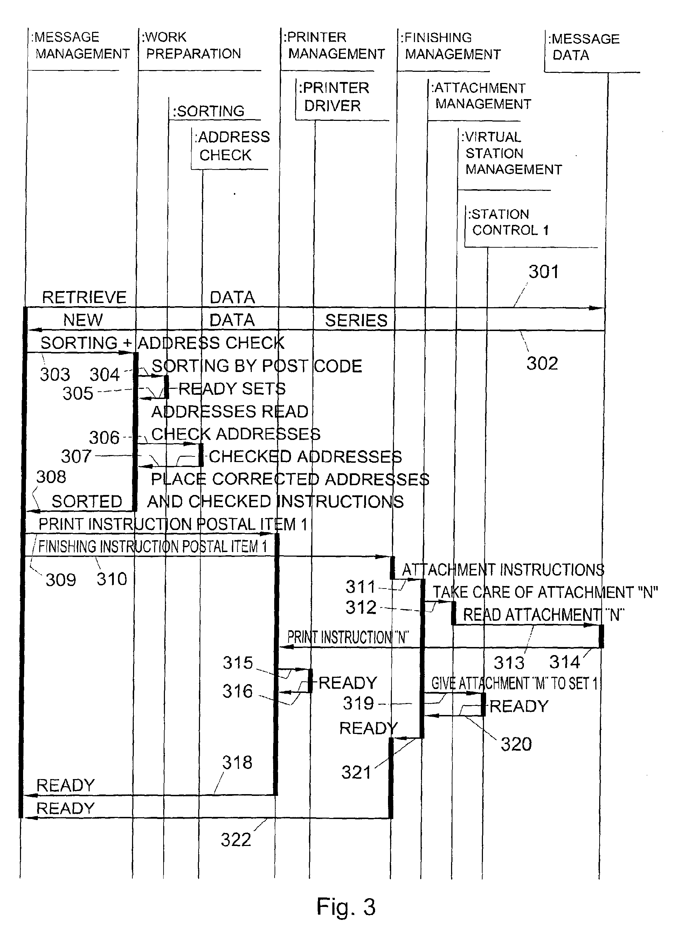

In Fig. 3, it is shown in more detail how a number of the objects shown in Fig. 2 cooperate for the processing of instructions for preparing a series of postal items.

As the first arrow 301, the message management object 100 retrieves message data, which data, as next arrow 302, are transferred to the message management object 301. The data contain the following specifications: sorting by post code and check addresses. For the adaptation of the message data to these specifications, the data are sent, as the next arrow 303, to the work preparation object, which converts the specification into a processing instruction "sort by post code" which is sent, with the data, to the sorting object 112 (arrow 304). After the sorting is completed (bold vertical line section between arrows 304, 305), the sorted data are sent back to the work preparation object 110 (arrow 305). Thereupon, with the processing instruction "check addresses", the data are sent to the address check object 113 (arrow 306). After verification and, if necessary, correction of address data (bold vertical line section between arrows 306, 307), the data are sent back to the work preparation object 110 (arrow 307). When sorting by corrected addresses is relevant, the latter two operations can be carried out in reverse order.

Now, the work preparation is finished and the sorted and checked data are sent back to the message management object 100 (arrow 308).

Thereupon, the message data are sent to the printer management object 120 and to the finishing management object 130 (arrows 309, 310). The finishing management object 130 sends the data relevant to the addition of attachments to the attachment management object 140 (arrow 311). These data concern the addition of attachments "N" and "M". In the attachment management object, attachment lists are included, from which it appears that attachment "M" is located in attachment feeder station 1, and that attachment "N" is only available in electronic form. Accordingly, the attachment management object 140 sends the instruction "take care of attachment "N"" to the virtual station management object 141 (arrow 312). The virtual station management object 141 then sends the instruction "read attachment "N"" to the message data object (arrow 313). In response, file "N" is sent to the printer management object 120 with the instruction to print "N" (arrow 314). In response, the printer management object 120, at a suitable moment for addition to the respective set of documents, sends an instruction and print file "N" to the printer driver 121 (arrow 315).

Printing can be driven by the central control unit by calling part-objects of the printer management object 120 in a particular order. This can for instance be done with the pseudo-code:
system.print.file=file "N"
system.print.number=4
system.print..printer.papertray=upper
system.print..printer.outputtray=standard
for p=1 to system.print.number
system.print.printer.print
p++

In this pseudo-code, first the value of the part-object which is part of the printer management object 120 is set at file "N". As a result, the file "N" is selected as file to be printed. Thereupon, the value of the part-object "number" which is part of the printer management object 120 is set at four. The object number indicates the number of prints of a file. Thereupon, the part-object "papertray" of the part-object "printer" is set at "upper". As a result, the upper paper tray is selected as paper tray. Thereupon, the part-object "output tray" of the part-object "printer" is set at "upper". As a result, the standard output is taken as output tray. In the example shown, this is the output of the printer which connects to the inserter system. After setting the values, the printing of the object system.print.file is repeated until the variable p has the value system.print.number, which has been set at four.

Attachment "N" is printed at a moment such that it can be collected with the other documents of the same postal item (for brevity's sake, the printing of the other documents is not represented in the diagram). Completion of the printing of attachment "N" results in a ready-message from the printer driver which is sent to the printer management object (arrow 316). In response to reception of the ready-message, the printer management object 120 sends a ready-message to the message management object 100 (arrow 318).

Meanwhile, the attachment management object 140 has sent an instruction for delivery of an attachment to set no. 1 to station control no. 1 143 (arrow 319). As a result, the attachment feeder station no. 1, in response to detection of the first set, adds an attachment "M" to other components of the respective postal item. After completion of this task, the station control no. 1 sends a ready-message to the attachment management object 140 (arrow 320). The attachment management object 140 thereupon sends a ready-message to the finishing management object 130 (arrow 321) and, in response, the finishing management object 130 sends a ready-message to the message management object (arrow 322). Thus, the operations for adding attachments to a set are finished.

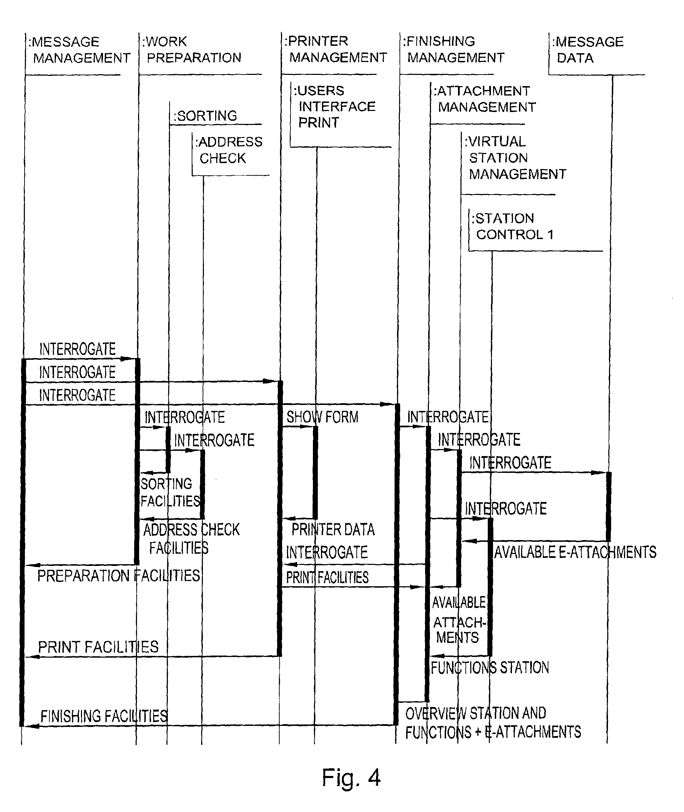

In Fig. 4, it is shown in more detail how, of a number of the objects shown in Fig. 2, when configuring a system, the instantiation of different classes is effected.

A configuration procedure starts with the message management object 100 interrogating the objects work preparation 110, printer management 120, finishing management 130. In response, each of the interrogated processing control objects 110, 120, 130 interrogates the facility control objects falling under them. More in particular, the work preparation object 110 interrogates the sorting and address checking objects 111 and 112 (the e-mail/post selection object is not represented in the diagram). In response, the sorting and address checking objects 111 and 112 send specifications concerning sorting facilities and address checking facilities to the work preparation object 110. In response, the work preparation object sends information concerning work preparation functions, among which sorting and address checking possibilities, to the message management object 100.

In a comparable manner, the printer management interrogates a facility control object 122 falling under it. This is not with the printer driver, but a users interface object in order to have a user or service personnel enter the relevant specifications of the printer. What is achieved in this manner is that, in a simple manner, the possibility of incorporating a large variety of printers is achieved. These, eventually, are driven via printer driver 121 belonging to the printer. After the respective information has been entered, read from a file selected by the user, or proves to be present still, the printer user interface object 122 sends data concerning the printer to the printer management object.

Also, in a comparable manner, the finishing management object 130 interrogates the attachment management object 140. In response, the attachment management object 140 interrogates virtual station management object 141 which in turn interrogates the message data about the attachments available for printing. The information concerning attachments to be printed is read from the message data and passed on by the virtual station management object 141 to the attachment management object 140. The attachment management object also interrogates the printer management object 120 about the available print facilities. This is because limitations regarding print facilities can have as a consequence that attachments, while being present as a print file in the message data or in a different electronically readable form, cannot be attached because they impose requirements on the printing possibilities that cannot be met by the print facilities.

From the data concerning available attachments and print facilities as well as from data concerning functions of the attachment feeder stations, which, in this example, have been obtained by interrogating station control no. 1, the attachment management object 140 determines which attachments can be attached. This information is reported to the finishing management object 130 which passes it on, together with information concerning other finishing facilities (the gathering of which is not described herein), to the message management object 100. Thus, also when configuring, use is made of the function oriented modular structure to gather the data required for controlling the system at the requisite places.

## Claims

1. A method for configuring control software for controlling, by means of apparatus, the preparation of messages comprising document data and an address for directing the delivery of the message at an addressee, equipped with processing facilities designed for carrying out defined processing operations, and a control structure for driving the processing facilities, comprising:
providing processing control components comprising converting instructions, for processing message data into processing instructions which specify processing operations to be carried out for preparing a message;
providing facility control components comprising converting instructions for processing said processing instructions into drive instructions for driving said processing facilities for carrying out processing operations in accordance with said processing instructions;
configuring the processing control components in accordance with said defined processing operations for the execution of which the processing facilities are designed; and
configuring the facility control components in accordance with specifications of said processing facilities.

2. A method according to claim 1, wherein configuring the facility control components is carried out in response to data from files belonging to said processing facilities.

3. A method according to claim 1 or 2, wherein at least one of said facility control components generates configuration instructions for configuring at least one of said processing control components.

4. A method according to any one of the preceding claims, wherein the processing control components form processing objects which form instantiations of processing classes, and wherein the facility control components form facility objects which form instantiations of facility classes, and wherein, during configuration, the instantiation of processing classes is at least partly determined by one or more of the facility objects.

5. A method for controlling, by means of control software, apparatus for preparing messages comprising document data and an address for directing the delivery of the message at an addressee, equipped with processing facilities designed for carrying out defined processing operations, and a control structure for driving the processing facilities, comprising:
in accordance with converting instructions from processing control components, processing message data into processing instructions which define processing operations for preparing postal items to be carried out by the apparatus;
in accordance with converting instructions from facility control components, processing said processing instructions into drive instructions for said processing facilities; and
in accordance with said drive instructions, driving said processing facilities.

6. A computer program structure in a form readable by a data processor system, for driving processing facilities for preparing messages, starting from message data, comprising:
processing control components comprising converting instructions, for processing message data into processing instructions which specify processing operations to be carried out for preparing a message;
facility control components comprising converting instructions for processing said processing instructions into drive instructions for driving said processing facilities for carrying out processing operations in accordance with said processing instructions;
processing configuration instructions for configuring said processing control components in accordance with said defined processing operations for the execution of which the processing facilities are designed; and
facility configuration instructions for configuring the facility control components in accordance with specifications of said processing facilities.

7. A computer program structure according to claim 6, further comprising instructions for reading at least a part of said configuration instructions from data files belonging to said processing facilities.

8. A computer program structure according to claim 6 or 7, wherein said facility control components are designed for generating at least a part of the processing configuration instructions for configuring at least a part of the processing control components.

9. A computer program structure according to any one of claims 6 - 8, wherein at least one of the processing control components and facility control instructions can be configured separately.

10. A computer program structure according to any one of claims 6 - 9, further comprising:
separate processing control components; and
separate facility control components;
wherein at least one of said separate facility control components is designed for driving processing facilities in accordance with processing instructions received from one of said separate processing control components; and
wherein at least one other of said separate facility control components is designed for driving processing facilities in accordance with processing instructions received from another one of said separate processing control components.

11. A computer program structure according to any one of claims 6 - 10, wherein at least one of said processing control components is coupled to at least two facility control components and is designed for, depending on the configuration, processing defined message data into processing instructions for the one or the other one of said facility control components.

12. A computer program structure according to any one of claims 6 - 11, further comprising:
processing classes for determining processing objects as the processing control components;
facility classes for determining facility objects as the facility control components;
expressions comprising the processing configuration instructions for creating the processing objects each as an instantiation of one of said processing classes, and
expressions comprising the station configuration instructions for creating facility objects each as an instantiation of one of said station classes.

13. An apparatus for preparing messages, comprising a number of processing facilities for carrying out processing operations for preparing messages, a control structure for controlling the processing facilities and a memory containing a computer program according to any one of claims 6 - 12.
